# EUROPEAN PATENT SPECIFICATION

(11) **EP 3 425 959 B1**
(45) Date of publication and mention of the grant of the patent: **13.05.2020**
(21) Application number: 18190016.8
(22) Date of filing: 10.03.2014
(51) Int. Cl.: H04W 36/00, H04W 88/06

(54) **COMMUNICATION HANDOVERS FROM NETWORKS USING UNLICENSED SPECTRUM TO CIRCUIT-SWITCHED NETWORKS**
KOMMUNIKATIONSWEITERREICHUNGEN AUS NETZWERKEN UNTER VERWENDUNG EINES NICHTLIZENZIERTEN SPEKTRUMS AN LEITUNGSVERMITTELTER NETZE
TRANSFERTS DE COMMUNICATION DES RÉSEAUX UTILISANT UN SPECTRE SANS LICENCE VERS DES RÉSEAUX À COMMUTATION DE CIRCUITS

(30) Priority: 14.03.2013 US 201313831271
(43) Date of publication of application: 09.01.2019
(62) Divisional of application: 14774739.8
(73) Proprietor: T-Mobile USA, Inc., Bellevue, WA 98006-1350 (US)
(72) Inventor: IONESCU, Alexandru Catalin, Bellevue, WA 98006-1350 (US); PISCOPO Jr., Robert F., Bellevue, WA 98006-1350 (US)
(74) Representative: Grünecker Patent- und Rechtsanwälte PartG mbB

(56) References cited:
- WO-A1-2010/006636
- WO-A2-2006/120289
- US-A1- 2006 126 565
- US-A1- 2008 162 637
- OSOK SONG SAMSUNG ELECTRONICS KOREA (REP OF) ET AL: "Introduction of Voice Call Continuity (VCC) for Q.FMC; D 19", ITU-T DRAFT STUDY PERIOD 2005-2008, INTERNATIONAL TELECOMMUNICATION UNION, GENEVA ; CH, vol. STUDY GROUP 19, 5 September 2005 (2005-09-05), pages 1-3, XP017408355,

## Description

### BACKGROUND

Use of packet-switched connections for transmitting synchronous communications, such as voice calls, and data across telecommunication networks is increasing. Such packet-switched connections allow for greater speed and throughput, while making packet-switched data from other networks, such as the Internet, more readily available. Most telecommunication networks, however, still utilize access networks that provide circuit-switched connections, such as Global System for Mobile Communications (GSM) networks or Universal Mobile Telecommunications System (UMTS) networks, due to the substantial infrastructure investment needed to expand packet-switched access networks. Such circuit-switched access networks may provide comparable or, at times, better speed and quality than packet-switched access networks for some types of data, including synchronous communications.

Because packet-switched access networks are not available to the same extent as circuit-switched access networks, techniques have been developed for switching from one of type of packet-switched access network - the Long Term Evolution (LTE) access network - to circuit-switched access networks while maintaining continuity for a communication session, such as a voice call. One technique for handover of a communication session from a LTE access network to a circuit-switched access network involves the use of the Third-Generate Partnership Project (3GPP)'s single radio voice call continuity (SRVCC) standard. With SRVCC, an eNode B of a LTE access network determines that a communication session handover should occur based on a measurement report received from a user device. The eNode B communicates this to a mobility management entity (MME), which makes a handover request of a mobile switching center (MSC) server of a circuit-switched access network that is available to the user device. The MSC server then prepares the circuit-switched access network for the handover, and communicates with an Internet Protocol (IP) multimedia subsystem (IMS) of the telecommunication network, the IMS maintaining continuity for the communication session during the handover. The MSC server then sends a handover response to the MME, and the MME instructs the user device to connect to the circuit-switched access network to continue the communication session.

Document US 2008/162637 A1 discloses mobility management that allows seamless handover of a user equipment between a wireless IP domain such as WiFi/DSL and a wireless circuit switched domain such as GSM while maintaining the continuity of the in-progress voice calls. When the UE moves from IMS/WiFi to GSM the UE registers and requests to handover the call to a new MSC in the GSM network via normal GSM procedures. The IMM (acting as the existing MSC in the IMS) coordinates the handover and initiates a call transfer to the new (GSM) MSC via a temporary roaming number allocated by the new MSC to transfer the IMS call via standard SIP re-invite methods. During the handover processing period, the UE is registered in both the IMS and GSM networks and, when the call transfer is completed, the UE un-registers from the IMS/WiFi network.

Document by OSOK SONG et al. "Introduction of Voice Call Continuity (VCC) for Q.FMC; D 19",ITU-T DRAFT STUDY PERIOD 2005-2008, INTERNATIONAL TELECOMMUNICATION UNION, GENEVA; CH, STUDY GROUP 19, 5 September 2005 (2005-09-05), pages 1-3, relates to active voice call continuity (VCC) between a Circuit Switched (CS) domain and the IP Multimedia Subsystem (IMS) when users move between the GSM/UMTS CS Domain and the IP Connectivity Access Network (e.g., WLAN interworking) with home IMS functionality. For handover from VolP with IMS to the cellular CS domain, the old communication leg using VolP is replaced by the new leg using CS bearer, after the handover.

Document WO 2010/006636 A1 discloses a Voice Call continuity (VCC) application in IMS which provides IMS subscribers seamless continuity for voice calls between IMS and CS CN domains, so that it is possible for a User Equipment (UE) to perform handovers between the CS and IMS domains as VCC enables call continuity in domain transfers. For example, calls may be transferred between CS and IMS domains when IMS UE performs a handover between GSM and WLAN AN.

Document WO 2006/120289 A2 invention relates to a method for performing inter-system handovers in a communication system comprising at least a mobile station, a call state control function, a first and a second call control node, a first and a second media gateway and a radio network node. The handover is achieved by way of connecting a call control node to a call state control function. The call control node allocates a media gateway for the session established. The session media bearers are routed via the media gateway. The call control node acts as an anchor node for the handover. As the mobile station moves to a new cell a media bearer is established to the media gateway from the mobile station via the new cell.

Document US 2006/126565 A1 discloses a method and system for interworking between cellular networks and wireless local area networks (WLANs). At least one cellular network, at least one WLAN and an IP network are deployed. A wireless transmit/receive unit (WTRU) first establishes a connection to a WLAN and a tunnel between an access point (AP) and a packet data gateway (PDG) is established. The PDG further establishes a tunnel to an IP network. The WTRU then invokes a service which is delivered through the WLAN. As signal quality from the AP degrades below a predetermined threshold, a handover from the WLAN to the cellular network is performed. A new connection to the cellular network may be established either before or after breaking the current connection to the WLAN or the two connections may be maintained simultaneously.

It is the object of the present invention to provide a method for a gateway device to enable handover of a communication session of a user device from an access network associated with unlicensed spectrum to a circuit-switched access network, and to provide a corresponding gateway device.

The object is solved by the subject matter of the independent claims.

Preferred embodiments of the present invention are defined by the dependent claims.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.

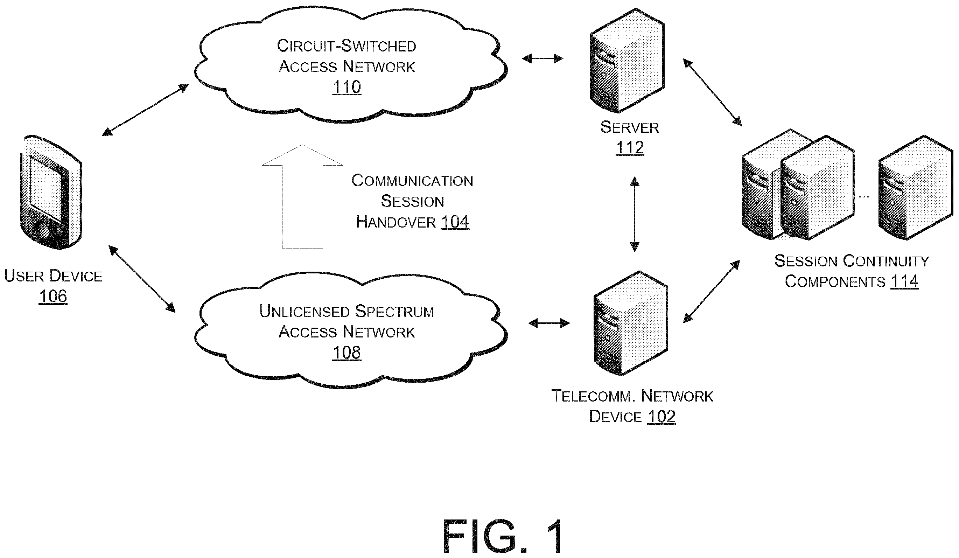

FIG. 1 illustrates an overview of devices involved in a handover of a communication session of a user device from an access network associated with unlicensed spectrum to a circuit-switched access network.

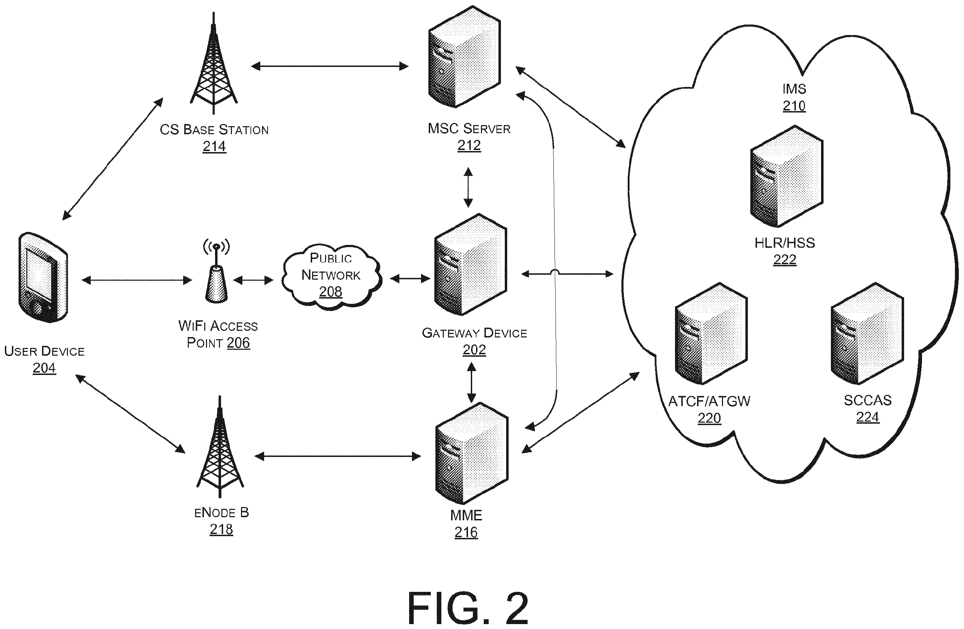

FIG. 2 illustrates an example telecommunication network, including a gateway device that communicates with a user device over an access network associated with unlicensed spectrum, a MSC server associated with a circuit-switched access network, and an IMS to maintain continuity of the communication session during handover of the communication session.

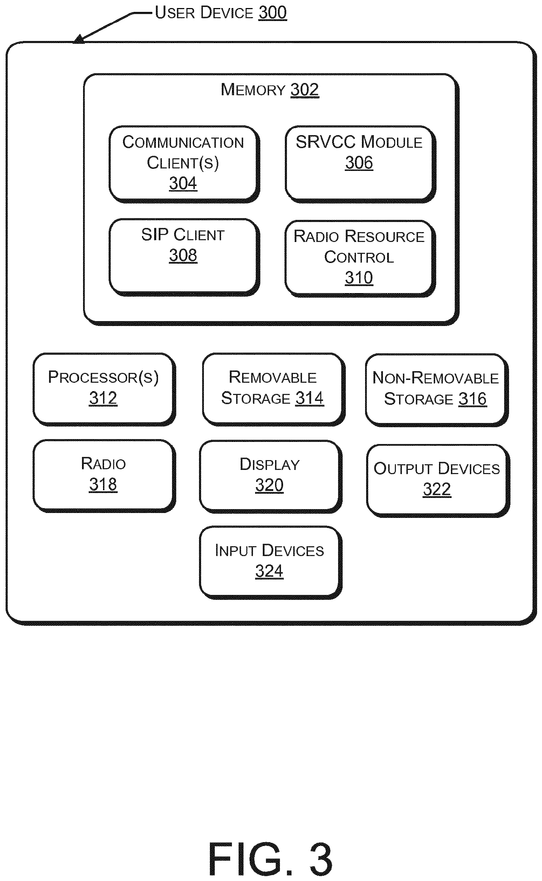

FIG. 3 illustrates a component level view of a user device capable of connecting to a plurality of access networks, of measuring those access networks, of providing measurement reports, of engaging in a communication session, and of switching access networks during the communication session.

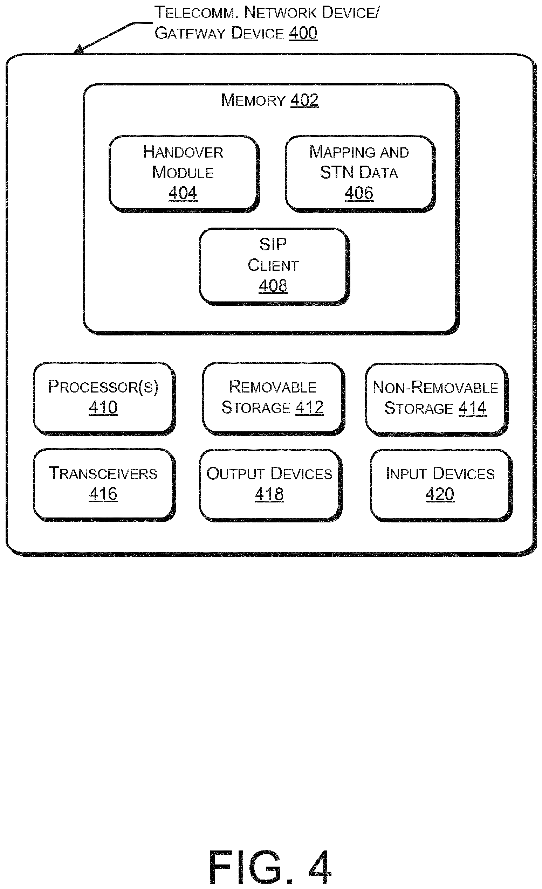

FIG. 4 illustrates a component level view of a telecommunication network device or gateway device capable of initiating and managing a handover of a communication session of a user device from an access network associated with unlicensed spectrum to a circuit-switched access network.

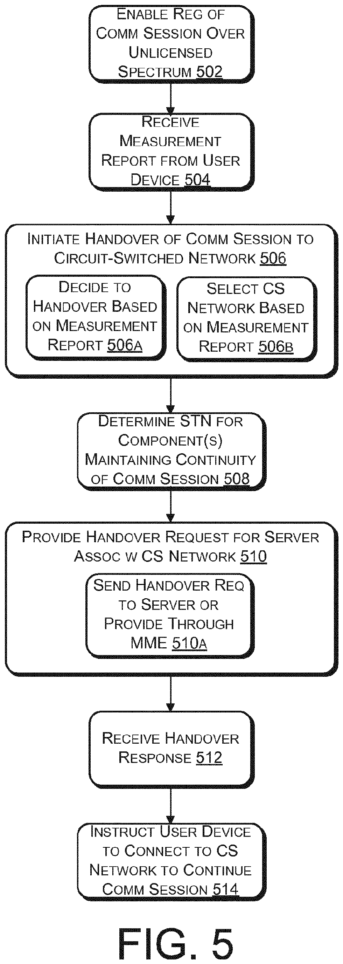

FIG. 5 illustrates an example process performed by a telecommunication network device or gateway device for initiating a handover, providing a handover request for a server associated with a circuit-switched access network, receiving a handover response indicating that the circuit-switched access network has been prepared for the handover, and instructing a user device to connect to the circuit-switched access network to continue a communication session over the circuit-switched access network.

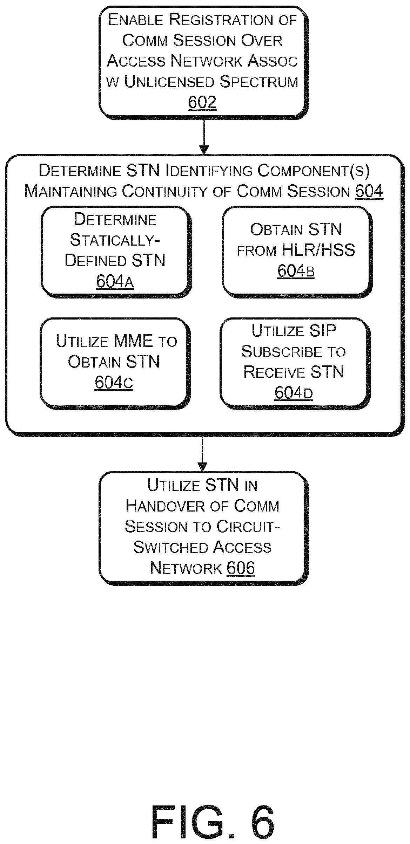

FIG. 6 illustrates an example process performed by a telecommunication network device or gateway device for enabling registration of a communication session, determining a session transfer number, and utilizing the session transfer number in a handover of a communication session of a user dcvicc from an access network associated with unlicensed spectrum to a circuit-switched access network.

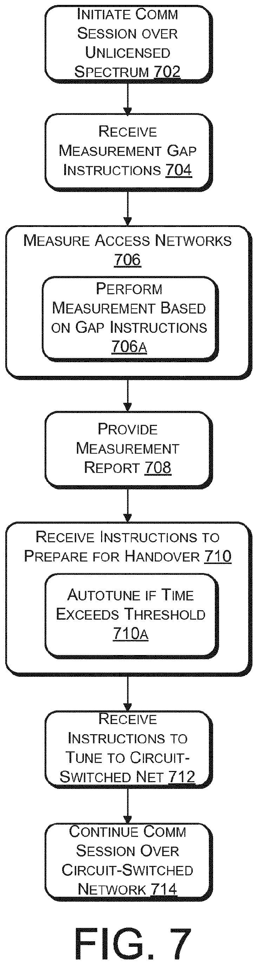

FIG. 7 illustrates an example process performed by a user device for initiating a communication session over an access network associated with unlicensed spectrum, measuring access networks, providing a measurement report, receiving instructions to tune to a circuit-switched access network responsive to providing the measurement report, and continuing the communication session over the circuit-switched access network.

### DETAILED DESCRIPTION

### Overview

This disclosure describes, in part, a telecommunication network device configured to initiate a handover of a communication session of a user device from an access network associated with unlicensed spectrum, such as a WiFi access network, to a circuit-switched access network. The telecommunication network device may be a gateway device, such as an evolved packet data gateway (ePDG). The telecommunication network device may provide a handover request to a server associated with the circuit-switched network, such as a MSC server, receive a response from the server indicating that the circuit-switched access network has been prepared for the handover, and instruct the user device connect to the circuit-switched access network to continue the communication session. The telecommunication network device may initiate the handover responsive to measurement reports received from the user device. In some embodiments, the telecommunication network device may also enable registration of the communication session when that session is first initiated by the user device. Also, the telecommunication network device may determine a session transfer number identifying one or more components of the telecommunication network which maintain continuity for the communication session, such as an IMS of the telecommunication network, and provide that session transfer number to the server associated with the circuit-switched access network as part of the handover request.

FIG. 1 illustrates an overview of devices involved in a handover of a communication session of a user device from an access network associated with unlicensed spectrum to a circuit-switched access network. As shown in FIG. 1, a telecommunication network device 102 may initiate a handover 104 of a communication session of a user device 106 from an access network 108 that is associated with unlicensed spectrum to a circuit-switched access network 110. As part of the handover 104, the telecommunication network device 102 may provide a handover request to a server 112 that is associated with the circuit-switched access network 110. The server 112 may then prepare the circuit-switched access network 110 for the handover 104 and communicate with one or more session continuity components 114 to ensure continuity of the communication session during the handover 104. The server 112 then responds to the telecommunication network device 102, and the telecommunication network device 102 instructs the user device 106 to connect to the circuit-switched access network 110 to continue the communication session.

The user device 106 may be any sort device capable of cellular or wireless network communication, such as a cellular phone, a tablet computer, a personal digital assistant (PDA), a personal computer (PC), a laptop computer, a media center, a work station, etc. An example user device 106 is illustrated in FIG. 3 and described below with reference to that figure.

In some embodiments, the user device 106 may have a radio and be configured to tune that radio to licensed wireless spectrum utilized by circuit-switched access networks and packet-switched access networks, such as LTE access networks. The user device 106 may also be configured to tune the radio to unlicensed wireless spectrum utilized by packet-switched access networks, such as WiFi access networks or WiMax access networks. When equipped with a single radio, the user device 106 may only be connected to one of these access networks at a time.

The user device 106 may further be configured to initiate or receive a communication session, such as a voice call, a video call, or another sort of synchronous communication. Initiation of such communications may involve communication clients and session initiation protocol (SIP) clients to communicate with session continuity components 114 of the telecommunication network. Both the initiation of a communication session and the components involved in the initiation are illustrated in FIGs. 2 and 3 and described in further detail herein.

In various embodiments, the user device 106 may measure access networks that are proximate to the user device 106 and provide measurements of those access networks in a measurement report to a device of the telecommunication network, such as telecommunication network device 102. The measurements may include signal strength, packet loss, packet discard, or network congestion. The proximate access networks may include both access networks that are detected by the user device 106 and those of neighboring cells, which the user device 106 may learn of from the telecommunication network. The proximate access networks also include both access networks associated with licensed spectrum, and access networks associated with unlicensed spectrum.

The user device 106 may initiate the communication session using a connection to the access network 108 associated with the unlicensed spectrum (e.g., as a WiFi voice call). In various embodiments, the access network 108 associated with unlicensed spectrum may be a WiFi access network, a WiMax access network, or any other type of wireless access network that utilizes unlicensed spectrum. The access network 108 may be provided by a wireless router, such as a router operating in accordance with IEEE 802.11 standards. Such routers send and receive data in packets, such as IP packets, and use packet-based communication standards, such as the Transmission Control Protocol (TCP)/IP standard. As such, the access network 108 is a packct-bascd (also known as "packet-switched") access network. The access network 108 may be secured by, for example, requiring a login, key, or other form of authentication, or may be unsecure. The access network 108 connects the user device 106 to a telecommunication network by communicating with the telecommunication network over a public network, such as the Internet. The router of the access network 108 may communicate with a device of the telecommunication network, such as the telecommunication network device 102, which sits at the edge of the telecommunication network. In some embodiments, the communication session may be secured (e.g., by encryption or tunneling) when communicated over the public network.

The telecommunication network device 102 may be a gateway device, such as an ePDG. An example telecommunication network device 102 is illustrated in FIG. 4 and described below with reference to that figure. Further, the telecommunication network device 102, as well as the server 112 and the session continuity components 114, may each be or include a server or server farm, multiple, distributed server farms, a mainframe, a work station, a personal computer (PC), a laptop computer, a tablet computer, an embedded system, or any other sort of device or devices. In one implementation, one or more of telecommunication network device 102, the server 112, and the session continuity components 114 may represent a plurality of computing devices working in communication, such as a cloud computing network of nodes. Also, the telecommunication network device 102, the server 112, and the session continuity components 114 may each be or include devices of a telecommunication network. Examples of the telecommunication network device 102, the server 112, and the session continuity components 114 are illustrated in FIG. 2 and are described in greater detail with reference to that figure.

In various embodiments, the telecommunication network device 102 may enable the user device 106 to initiate the communication session by passing messages to appropriate device(s) of the telecommunication network, such as the session continuity components 114. The telecommunication network device 102 may also receive measurement reports from the user device 106 and may apply one or more models, thresholds, rules, or criteria to the measurements included in the measurement reports to determine whether a handover 104 is appropriate. For example, if the signal strength of the access network 108 falls below a threshold, the telecommunication network device 102 may initiate the handover 104. In other embodiments, the telecommunication network device 102 may select a circuit-switched access network 110 that is not included in the measurement reports to receive the handover. For example, the measurement reports may include measurements associated with the access network 108 and with a LTE access network, but no measurements for the circuit-switched access network 110. The telecommunication network device 102, as part of the telecommunication network, may have access to measurements of the circuit-switched access network 110, however, and may use those measurements in conjunction with those provided in the measurement reports in making a handover decision.

Upon initiating a handover 104, the telecommunication network device 102 selects a circuit-switched access network 110 to transition the communication session to. For example, the telecommunication network device 102 may select the circuit-switchcd access network 110 based on signal congestion levels of the circuit-switched access networks included in the measurement report. The telecommunication network device 102 may then determine the server 112 associated with the selected circuit-switched access network 110 by referencing mappings, such as a table.

As part of the handover 104, the telecommunication network device 102 may send instructions to the user device 106 preparing the user device 106 for the handover 104. Such instructions may include a directive to automatically tune the radio of the user device 106 to the circuit-switched access network 110 if the user device 106 has not heard from the telecommunication network device 102 within a threshold period of time.

The telecommunication network device 102 then sends a handover request, such as a SRVCC packet-switched (PS) to circuit-switched (CS) request. The request may be made over an interface between the telecommunication network device 102 and the server 112 or through a MME, which may have an SV interface with the server 112. The handover request may include at least information identifying the user device 106, such as an international mobile subscriber identity (IMSI), information identifying the communication session, such as a correlation mobile station international subscriber directory number (C-MSISDN), and an identifier of the session continuity components 114, such as a session transfer number-single radio (STN-SR).

In some embodiments, the server 112 may be an MSC server associated with the circuit-switched access network 110. The circuit-switched access network 110 may be any sort of circuit-switched access network 110, such as a GSM or UMTS network. The circuit-switched access network 110 may also be referred to as a universal terrestrial radio network (UTRAN) or a GSM EDGE radio access network (GERAN) and may include a base station or Node B, as well as a radio network controller (RNC). The circuit-switched access network 110 may provide circuit-switched connections over a given signal spectrum and may use any sort of air interface, such as a code division multiple access (CDMA), time division multiple access (TDMA), or frequency division multiple access (FDMA) air interface. Communications received by the circuit-switched access network 110 from the user device 106 are transmitted to a server 112 of the telecommunication network, such as an MSC server.

Upon receiving a handover request, the server 112 prepares the circuit-switched access network 110 for the handover 104 by, for example, allocating resources at a base station and RNC of the circuit-switched access network 110. The server 112 also uses the identifier of the session continuity components 114 included in the handover request to request that the session continuity components perform a session transfer. The session transfer enables the handover 104 to occur without loss of continuity to the communication session.

In various embodiments, the session continuity components 114 represent components of an IMS of the telecommunication network. Examples of such components, and of the session transfer, are described further herein. Upon receiving a session transfer request from the server 112 and performing the session transfer, the session continuity components 114 respond to the server 112, indicating completion of the session transfer.

In further embodiments, upon receiving a response indicating completion of the session transfer, and after preparing the circuit-switched access network 110 for the handover 104, the server 112 send a handover response, such as an SRVCC PS to CS response, to the telecommunication network device 102. The telecommunication network device 102 then instructs the user device 106 to tune its radio to the circuit-switched access network 110 in order to connect to the circuit-switched access network 110 and continue the communication session. Upon receiving such instructions, the user device 106 carries them out, completing the handover 104.

### Example Telecommunication Network

FIG. 2 illustrates an example telecommunication network, including a gateway device that communicates with a user device over an access network associated with unlicensed spectrum, a MSC server associated with a circuit-switched access network, and an IMS to maintain continuity of the communication session during handover of the communication session. As illustrated, the example telecommunication network includes a gateway device 202 which communicates with a user device 204 via a WiFi access network provided by a WiFi access point 206. The WiFi access point 206 is connected to the gateway device 202 by a public network 208, such as the Internet. The example telecommunication network further includes an IMS 210 and MSC server 212. The MSC server 212 may be associated with a circuit-switched access network, which in turn may include a CS base station 214 that provides connectivity to the circuit-switched access network. Also, the example telecommunication network may include an MME, which may enable connectivity to the telecommunication network through an LTE access network which includes an eNode B 218. The IMS 210 of the telecommunication network may include a number of nodes, such as an access transfer control function (ATCF)/access transfer gateway (ATGW) 220, a home location register (HLR)/home subscriber server (HSS) 222, and a service centralization and continuity application server (SCCAS) 224.

The telecommunication network may also include a number of devices or nodes not illustrated in FIG. 2. Such devices or nodes may include a visitor location register (VLR), a serving general packet radio service (GPRS) support node (SGSN), a gateway GPRS support node (GGSN), a policy control rules function (PCRF) node, a serving gateway, a session border controller (SBC), a media gateway. IMS 210 may further include a number of devices or nodes not illustrated in FIG. 2, such as a presence server, a telephony application server (TAS), and one or more call session control functions (CSCF). A core network of the telecommunication network may be a GPRS core network, an evolved packet core (EPC) network, or may include elements from both types of core networks. The telecommunication network may provide a variety of services to user devices 204, such as synchronous communication routing across a public switched telephone network (PSTN). Further services may include call control, switching, authentication, billing, etc.

The devices and networks illustrated in FIG. 2 may be examples of the devices and networks illustrated in FIG. 1 and described above. For instance, the gateway device 202 may be a telecommunication network device 102, the user device 204 may be a user device 106, the IMS 210 and its components 220-224 may be session continuity components 114, and the MSC server 212 may be a server 112. Also, the WiFi access point 206 may be an access point for the access network 108 associated with unlicensed spectrum, and the CS base station 214 may be a base station for the circuit-switched access network 110. Accordingly, the descriptions of the devices and networks of FIG. 1 apply to the devices and networks of FIG. 2.

The devices and networks of FIG. 2 may cooperate to accomplish the handover 104 shown in FIG. 1 and described above. They may also cooperate to accomplish the initialization of a communication session of a user device 202 and to provide the gateway device with a session transfer number (STN) identifying the IMS 210.

In initializing the communication session, the user device 204 must register the communication session with the IMS 210 of the telecommunication network. To do this, the user device 204 sends an initiation SIP register request to the IMS 210 via the WiFi access point 206, public network 208, and gateway device 202. The gateway device 202 may transmit the SIP register request to the IMS 210 directly or through a packet data network gateway (PDN-GW) of the telecommunication network. A P-CSCF of the IMS 210 may receive the SIP register request, and may provide the SIP register request to the ATCF/ATGW 220 of the IMS 210. The ATCF/ATGW 220 allocates a session transfer number, such as an STN-SR, and includes the STN-SR in the SIP register request to ensure that the ATCF is included in the signaling path for future SIP requests, such as session transfer requests from MSC servers 212. The ATCF/ATGW 220 then sends the SIP register request to an interrogating call session control function (I-CSCF)/serving call session control function (S-CSCF), which in turn sends the SIP register request to the SCCAS 224. Alternatively, the STN-SR may be allocated by and associated with the SCCAS 224. The SCCAS 224 then sends a pull message to the HLR/HSS 222 to determine whether the user device 204 is SRVCC capable and to retrieve an STN-SR stored in the HLR/HSS 222. If the STN-SR received from the HLR/HSS 222 differs from the STN-SR included in the SIP register request, the SCCAS 224 updates the HLR/HSS 222 with the STN-SR included in the SIP register request. The SCCAS 224 may then send a SIP register response to the user device 204 to complete the IMS registration of the communication session.

In various embodiments, the gateway device 202 determines the STN which identifies the IMS 210 during an attach procedure. As mentioned above, the STN-SR is an example of a STN. There are a number of different ways that the gateway device 202 can determine the STN during an attach procedure. A first option is for the STN to be statically defined and mapped to an ATCF 220 or SCCAS 224. In the first option, the gateway device 202 learns the P-CSCF address that the SIP register request is sent to, and retrieves the STN from a mapping of P-CSCFs to ATCFs/SCCASs and STNs. A second option is for the HLR/HSS 222 to send an Insert Subscriber Data message, which includes the STN, to the gateway device 202. The HLR/HSS 222 does this in response to the gateway device performing a subscriber update during the attach procedure. This second option creates a binding between the gateway device 202 and the HLR/HSS 220 for the user. In a third option, the gateway device 202 interacts with the MME 216 to have the MME 216 perform the location update and receive the STN via an Insert Subscriber Data message from the HLR/HSS 222. With this third option, the gateway device 202 would not receive the STN, but would instead act through the MME 216 during a handover, such as the handover 104. A fourth option is for the gateway device 202 would use a SIP subscribe/notify message to obtain the STN from the IMS 210.

An example handover 104 of a communication session of a user device 106 from an access network 108 associated with unlicensed spectrum to a circuit-switchcd access network 110 is describe above. In order to relate an example handover in further detail, and with reference to the devices and networks of FIG. 2, a further example handover is described. In this example, the communication session subject to the handover is a communication session of the user device 204 that uses a WiFi access network associated with the WiFi access point 206. Such a communication session may, for instance, be a WiFi-based voice call.

In various embodiments, the user device 204 may send measurement reports to the gateway device 202 via the WiFi access network and public network 208. The user device 204 measures access networks based on measurement gap instructions and includes those measurements in the measurement reports. Measurement gap instructions may be received by the user device 204 and utilized to create gaps in the communication session and to use those gaps to tune the radio to the different access networks and to obtain measurements for those access networks. The measurement gap instructions may be provided by the gateway device 202 or by any other node or device of the telecommunication network.

These measurement reports may include measurements of the WiFi access network, of a circuit-switched access network provided by the CS base station 214, and of a LTE access network provided by the eNode B 218. Alternatively, they may include only measurements of a subset of those access networks. Such measurements may include signal strength, packet loss, packet discard, or network congestion. The gateway device 202 may apply models, thresholds, rules, or criteria to the measurements and may initiate a handover based on the application of those models, thresholds, rules, or criteria to the measurements. As mentioned above, the gateway device 202 may consider measurements for access networks not included in the measurement reports. For example, the measurement reports may include measurements for the WiFi access network and LTE access network, but not for the circuit-switched access network. The gateway device 202 may have access to measurements of the circuit-switched access network and may use those measurements, in conjunction with those reported in the measurement reports, in making thee handover decision. Upon initiating the handover, the gateway device 202 may select the circuit-switched access network to receive the communication session. Such a selection may also be based on the measurement report, other measurements know to the telecommunication network, or both. The gateway device 202 may also send instructions to the user device 204 to prepare the user device for the handover. Such instruction may include, for example, a directive to automatically tune the radio of the user device to the circuit-switched access network if the user device 204 has not received a communication from the gateway device during a time period.

The gateway device 202 may then provide a handover request for the MSC server 212 associated with the selected circuit-switched access network. The gateway device 202 may determine the identity of the MSC server 212 by referencing mappings that associate MSC servers and circuit-switched access networks. The handover request may be a SRVCC PS to CS request and may include an IMSI for the user device 204, the STN-SR, a C-MSISDN for the communication session, a generic source to target transparent container, a mobility management (MM) context, and an emergency indication. The gateway device 202 may provide the handover request directly to the identified MSC server 212 through an interface. Such an interface may be similar to or the same as the SV interface between the MME 216 and the MSC server 212. Alternatively, the gateway device 202 may send a Handover Required Message to the MME 216 and utilize the MME 216 to make the handover request of the MSC server 212.

In various embodiments, upon receiving the handover request, the MSC server 212 performs resource allocation with the target CS base station 214 by exchanging handover request/acknowledgement messages with the CS base station 214. The MSC server 212 also initiates a session transfer by sending a SIP invite, which includes the STN-SR, to the IMS 210.

Because the STN-SR is included in the SIP invite, the SIP invite initiating the session transfer is received by whichever of the ATCF 220 or SCCAS 224 is associated with the STN-SR. If the STN-SR is associated with the SCCAS 224, the SCCAS 224 performs the handover of the session from the source access leg (i.e., the access leg for the WiFi access network) to the newly allocated CS leg (i.e., transmitting those packets using the circuit-switched access network) and causes the user device 224 and its communication partner device to communicate with each other to establish a new media path that utilizes the CS access leg. As part of performing the handover, the SCCAS 224 releases the source access leg, and the IMS 210 responds to the SIP invite of the MSC server 212, completing the session transfer.

If the STN-SR is associated with the ATCF 220, the ATCF 220 receives the SIP invite, switches the session from the source access leg to the CS access leg, sends a SIP invite to the SCCAS 224 to inform the SCCAS 224 of the switch and cause it to release the source access leg, and responds to the SIP invite of the MSC server 212, completing the session transfer. The media remains anchored at the ATGW 220 during the session transfer, and the conversation partner device is not made aware of session transfer.

The MSC server 212 then sends a handover response to the gateway device 202 (either directly or to the MME 216). Such a handover response may be a SRVCC PS to CS response, which may include a target to source transparent container. The gateway device 202 then sends a handover command message to the user device 204, instructing the user device 204 to tune its radio to the circuit-switched access network of the CS base station 214. Handover detection then occurs at the CS base station 214, and the CS base station 214 sends a handover complete message to the MSC server 212. The MSC server 212 may then send a SRVCC PS to CS complete notification message to the gateway device 202, and the gateway device 202 responds with an acknowledgment, completing the handover.

### Example Devices

FIG. 3 illustrates a component level view of a user device capable of connecting to a plurality of access networks, of measuring those access networks, of providing measurement reports, of engaging in a communication session, and of switching access networks during the communication session. The user device 300 may be any sort of user device, such as a user device 106 or user device 204. As illustrated, the user device 300 comprises a system memory 302 storing communication client(s) 304, SRVCC module 306, SIP client 308, and radio resource control 310. Also, the user device 300 includes processor(s) 312, a removable storage 314, a non-removable storage 316, radio 318, a display 320, output device(s) 322, and input device(s) 324.

In various embodiments, system memory 302 is volatile (such as RAM), non-volatile (such as ROM, flash memory, etc.) or some combination of the two. The communication client(s) 304 stored in the system memory 302 may enable the user device 300 to initiate and carry on communication sessions. The communication client(s) 304 may include voice call handlers, video calling clients, gaming and media clients, etc. The communication client(s) 304 may utilize a policy, preferences, etc. in determining which of a number of available access networks the communication client(s) 304 should use in initiating communication sessions. For example, the communication client(s) 304 may utilize a policy or preference that prefers WiFi access networks to LTE access networks, and LTE access networks to circuit-switched access networks.

The SRVCC module 306 may perform a number of functions, such as interfacing with the radio 318 through the radio resource control 310, receiving instructions, such as measurement gap instructions, instructions preparing the user device 300 for a handover, and instructions to complete a handover by tuning the radio 318, performing measurements of access networks, generating measurement reports that include the measurements, and providing the measurement reports to the telecommunication network.

The SIP client 308 may participate with the communication clicnt(s) 304 in initiating a communication session by, for example, formulating a SIP register request and sending the SIP register request to the telecommunication network.

The radio resource control 310 may, for example, be a radio resource control layer of the user device 300 and may interact with the radio 318 and other modules and components of the user device 300 in order to tune the radio 318 and communicate using the radio 318.

In some embodiments, the processor(s) 312 is a central processing unit (CPU), a graphics processing unit (GPU), or both CPU and GPU, or any other sort of processing unit.

User device 300 also includes additional data storage devices (removable and/or non-removable) such as, for example, magnetic disks, optical disks, or tape. Such additional storage is illustrated in FIG. 3 by removable storage 314 and non-removable storage 316. Tangible computer-readable media may include volatile and nonvolatile, removable and non-removable media implemented in any method or technology for storage of information, such as computer readable instructions, data structures, program modules, or other data. System memory 302, removable storage 314 and non-removable storage 316 are all examples of computer-readable storage media. Computer-readable storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by the user device 300. Any such tangible computer-readable media may be part of the user device 300.

In some embodiments, the radio 318 includes any sort of radio known in the art. For example, radio 318 may be a radio transceiver that performs the function of transmitting and receiving radio frequency communications. The radio interface may facilitate wireless connectivity between the user device 300 and various cell towers, base stations and/or access points of access networks. The radio interface may further perform the function of transmitting and receiving wireless communications using, for example, the IEEE 802.11, 802.16 and/or 802.20 standards. The radio 318 may also include a wireless communication transceiver or a near field antenna for communicating over local wireless data networks and personal area networks (e.g., Bluetooth or near field communication (NFC) networks).

In various embodiments, the display 320 is a liquid crystal display or any other type of display commonly used in telecommunication devices. For example, display 320 may be a touch-sensitive display screen, and can then also act as an input device or keypad, such as for providing a soft-key keyboard, navigation buttons, or the like.

In some embodiments, the output devices 322 include any sort of output devices known in the art, such as a display (already described as display 320), speakers, a vibrating mechanism, or a tactile feedback mechanism. Output devices 322 also include ports for one or more peripheral devices, such as headphones, peripheral speakers, or a peripheral display.

In various embodiments, input devices 324 include any sort of input devices known in the art. For example, input devices 324 may include a camera, a microphone, a keyboard/keypad, or a touch-sensitive display (such as the touch-sensitive display screen described above). A keyboard/keypad may be a push button numeric dialing pad (such as on a typical telecommunication device), a multi-key keyboard (such as a conventional QWERTY keyboard), or one or more other types of keys or buttons, and may also include a joystick-like controller and/or designated navigation buttons, or the like.

FIG. 4 illustrates a component level view of a telecommunication network device or gateway device capable of initiating and managing a handover of a communication session of a user device from an access network associated with unlicensed spectrum to a circuit-switched access network. The telecommunication network device/gateway device 400 may be any sort of user device, such as telecommunication network device 102 or gateway device 202. As illustrated, the telecommunication network device/gateway device 400 comprises a system memory 402 storing a handover module 404, mappings and STN data 406, and a SIP client 408. Also, the telecommunication network device/gateway device 400 includes processor(s) 410, a removable storage 412, a non-removable storage 414, transceivers 416, output device(s) 418, and input device(s) 420.

In various embodiments, system memory 402 is volatile (such as RAM), non-volatile (such as ROM, flash memory, etc.) or some combination of the two. The handover module 404 stored in the system memory 402 may perform a number of functions, including initiating a handover of a communication session based on measurement reports, selecting a circuit-switched access network for the handover, providing a handover request to a server associated with the circuit-switched access network, either directly or through an MME, receiving a handover response, and instructing the user device to connect to the circuit-switched access network to complete the handover. The handover module 404 may also provide measurement gap instructions to a user device and instruct the user device to prepare for a handover.

The mapping and STN data 406 may include mappings of circuit-switched access networks to servers, such as MSC servers, and mappings of proxy call session control functions (P-CSCFs) to ATCFs and STN-SRs.

The SIP client 408 may enable a user device to perform a SIP registration for a communication session with an IMS or other session continuity components.

In some embodiments, the processor(s) 410 is a central processing unit (CPU), a graphics processing unit (GPU), or both CPU and GPU, or any other sort of processing unit.

The telecommunication network device/gateway device 400 also includes additional data storage devices (removable and/or non-removable) such as, for example, magnetic disks, optical disks, or tape. Such additional storage is illustrated in FIG. 4 by removable storage 412 and non-removable storage 414. Tangible computer-readable media may include volatile and nonvolatile, removable and non-removable media implemented in any method or technology for storage of information, such as computer readable instructions, data structures, program modules, or other data. System memory 402, removable storage 412 and non-removable storage 414 are all examples of computer-readable storage media. Computer-readable storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by telecommunication network device/gateway device 400. Any such tangible computer-readable media may be part of the telecommunication network device/gateway device 400.

In some embodiments, the transceivers 416 include any sort of transceivers known in the art. For example, transceivers 416 may be a radio transceiver that performs the function of transmitting and receiving radio frequency communications. Also, or instead, the transceivers 416 may include other wireless or wired connectors, such as Ethernet connectors or near field antennas. The transceivers 416 may facilitate connectivity between a public network, such as public network 208, and one or more other devices of a telecommunication network.

In some embodiments, the output devices 418 include any sort of output devices known in the art, such as a display, speakers, a vibrating mechanism, or a tactile feedback mechanism. Output devices 418 also include ports for one or more peripheral devices, such as headphones, peripheral speakers, or a peripheral display.

In various embodiments, input devices 420 include any sort of input devices known in the art. For example, input devices 420 may include a camera, a microphone, a keyboard/keypad, or a touch-sensitive display (such as the touch-sensitive display screen described above). A keyboard/keypad may be a push button numeric dialing pad (such as on a typical telecommunication device), a multi-key keyboard (such as a conventional QWERTY keyboard), or one or more other types of keys or buttons, and may also include a joystick-like controller and/or designated navigation buttons, or the like.

### Example Processes

FIGs. 5-7 illustrate example processes. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

FIG. 5 illustrates an example process performed by a telecommunication network device or gateway device for initiating a handover, providing a handover request for a server associated with a circuit-switched access network, receiving a handover response indicating that the circuit-switched access network has been prepared for the handover, and instructing a user device to connect to the circuit-switched access network to continue a communication session over the circuit-switched access network. The process includes, at 502, enabling, by a telecommunication network device, such an evolved packet data gateway (ePDG), registration of a communication session for a user device accessing the telecommunication network through an access network associated with unlicensed spectrum, such as a WiFi access network.

At 504, the telecommunication network device receives a measurement report from the user device. The measurement report may include measurements associated with a plurality of access networks that include at least a circuit-switched access network and the access network associated with unlicensed spectrum.

At 506, the telecommunication network device initiates a handover of the communication session of the user device from the access network associated with unlicensed spectrum to the circuit-switched access network. At 506a, the initiating is based at least in part on the measurement report. At 506b, the telecommunication network device also selects the circuit-switched access network based on the measurement report and determines the identity of a server associated with the circuit-switched access network, such as a MSC server.

At 508, the telecommunication network device determines a session transfer number identifying one or more components of the telecommunication network which maintain continuity for the communication session, such as an IMS.

At 510, the telecommunication network device provides a handover request to the server associated with the circuit-switched access network. The handover request may include at least an IMSI, the determined session transfer number, and a C-MSISDN. At 510a, the providing includes sending the handover request to the server or sending the handover request to a MME for the MME to transmit to the server. The handover request may be a SRVCC PS to CS request.

At 512, the telecommunication network device receives a handover response from the server indicating that the circuit-switched access network has been prepared for the handover.

At 514, the telecommunication network device instructs the user device to connect to the circuit-switched access network to continue the communication session.

FIG. 6 illustrates an example process performed by a telecommunication network device or gateway device for enabling registration of a communication session, determining a session transfer number, and utilizing the session transfer number in a handover of a communication session of a user device from an access network associated with unlicensed spectrum to a circuit-switched access network. The process includes, at 602, enabling, by a gateway device, registration of a communication session for a user device accessing a telecommunication network through an access network associated with unlicensed spectrum.

At 604, the gateway device determines a session transfer number identifying one or more components of the telecommunication network which maintain continuity for the communication session. At 604a, the determining may comprise determining a STN-SR that is statically assigned to an ATCF of the one or more components. At 604b, the determining may comprise obtaining a STN-SR from a HLR or a HSS as part of a location update performed by the gateway device for the user device. At 604c, the determining may comprise determining the session transfer number comprises utilizing a MME to obtain a STN-SR. At 604d, the determining may comprise determining the session transfer number comprises utilizing a SIP subscribe mechanism to receive a STN-SR.

At 606, the gateway device utilizes the session transfer number in a handover of the communication session from the access network associated with the unlicensed spectrum to a circuit-switched access network.

FIG. 7 illustrates an example process performed by a user device for initiating a communication session over an access network associated with unlicensed spectrum, measuring access networks, providing a measurement report, receiving instructions to tune to a circuit-switched access network responsive to providing the measurement report, and continuing the communication session over the circuit-switched access network. The process includes, at 702, initiating, by a user device, a communication session via an access network associated with unlicensed spectrum.

At 704, the user device receives instructions including gaps in the communication session for performing measurements of a plurality of access networks, including at least a circuit-switched access network and the access network associated with unlicensed spectrum.

At 706, the user device measures the plurality of access networks. At 706a, the measuring is performed based at least in part on the instructions including the gaps. The measurements may include at least one of signal strength, packet loss, packet discard, or network congestion.

At 708, the user device provides a measurement report that includes the measurements of the plurality of access networks to a gateway device via the access network associated with unlicensed spectrum.

At 710, the user device receives instructions preparing the user device for a handover of the communication session to the circuit-switched access network. At 710a, the instructions include instructions for the user device to automatically tune the radio to the circuit-switched access network after a threshold period of time following receipt of the instructions preparing the user device for the handover.

At 712, the user device receives instructions from the gateway device to tune the radio to the circuit-switched access network.

At 714, the user device continues the communication session using the circuit-switched access network.

### CONCLUSION

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A method performed by a gateway device to enable handover of a communication session of a user device from an access network associated with unlicensed spectrum to a circuit-switched access network, the method comprising:
receiving (504) a measurement report from the user device, the measurement report including measurements associated with a plurality of access networks, the plurality of access networks including at least the circuit-switched network and the access network associated with unlicensed spectrum;
deciding (506), based at least in part on the measurement report, to initiate a handover of the communication session of the user device from the access network associated with unlicensed spectrum to the circuit-switched access network;
determining (508) a session transfer number identifying one or more telecommunication network components for performing a transfer of the communication session from the access network associated with unlicensed spectrum to the circuit-switched access network;
providing (510) a handover request to a server associated with the circuit-switched access network, the handover request including the determined session transfer number;
receiving (512) a handover response from the server, the handover response indicating that the one or more telecommunication network components identified by the session transfer number have prepared the circuit-switched access network for the transfer of the communication session from the access network associated with unlicensed spectrum to the circuit-switched access network; and
instructing (514) the user device to connect to the circuit-switched access network to continue the communication session.

2. The method of claim 1, further comprising, prior to initiating the handover, enabling (502) registration of the communication session for the user device accessing the telecommunication network through the access network associated with unlicensed spectrum.

3. The method of claim 1, wherein the deciding (506) comprises selecting the circuit-switched access network based on the measurement report and determining the identity of the server associated with the circuit-switched access network.

4. The method of claim 1, wherein the handover request includes at least an international mobile subscriber identity, IMSI, the session transfer number, and a correlation mobile station international subscriber directory number, C-MSISDN.

5. The method of claim 1, wherein the telecommunication network device is an evolved packet data gateway, ePDG.

6. The method of claim 1, wherein determining (508) the session transfer number comprises:
determining a session transfer number-single radio, STN-SR, that is statically assigned to an access transfer control function, ATCF, of the one or more components; or
obtaining a STN-SR from a home location register, HLR, or a home subscriber server, HSS, as part of a location update performed by the gateway device for the user device.

7. The method of claim 1, wherein determining (508) the session transfer number comprises:
utilizing a MME to obtain a STN-SR; or
utilizing a session initiation protocol, SIP, subscribe mechanism to receive a STN-SR.

8. The method of claim 1, wherein instructing (514) the user device to connect to the circuit-switched access network to continue the communication session comprises instructing the user device to tune a radio of the user device to the circuit-switched access network.

9. The method of claim 1, wherein the handover request is a single radio voice call continuity packet-switched to circuit-switched request.

10. The method of claim 1, wherein the measurements include at least one of signal strength, packet loss, packet discard, or network congestion.

11. The method of claim 1, wherein the measurement report includes a measurement of at least a signal strength of the access network, and wherein it is decided to initiate the handover if the signal strength of the access network falls below a threshold.

12. A gateway device configured to enable handover of a communication session of a user device from an access network associated with unlicensed spectrum to a circuit-switched access network which comprises means for performing the steps of a method according to any one of claims 1 to 11.

## Patentansprüche

1. Verfahren, das von einer eine Gatewayvorrichtung zum Ermöglichen einer Übergabe einer Kommunikationssitzung einer Benutzervorrichtung von einem Zugangsnetzwerk, das einem nicht lizenzierten Spektrum zugeordnet ist, an ein leitungsvermitteltes Zugangsnetzwerk durchgeführt wird, wobei das Verfahren umfasst:
Empfangen (504) eines Messberichts von der Benutzervorrichtung, wobei der Messbericht Messungen im Zusammenhang mit einer Vielzahl von Zugangsnetzwerken enthält, wobei die Vielzahl von Zugangsnetzwerken zumindest das leitungsvermittelte Netzwerk und das Zugangsnetzwerk enthält, welches dem nicht lizenzierten Spektrum zugeordnet ist;
Entscheiden (506) basierend zumindest zum Teil auf dem Messbericht, eine Übergabe der Kommunikationssitzung der Benutzervorrichtung von dem Zugangsnetzwerk, das dem nicht lizenzierten Spektrum zugeordnet ist, an das leitungsvermittelte Zugangsnetzwerk zu initiieren;
Bestimmen (508) einer Sitzungstransfernummer zum Identifizieren von einen oder mehreren Telekommunikationsnetzwerkkomponenten zur Durchführung eines Transfers der Kommunikationssitzung von dem Zugangsnetzwerk, welches dem nicht lizenzierten Spektrum zugeordnet ist, auf das leitungsvermittelte Zugangsnetzwerk;
Bereitstellen (510) einer Übergabeanforderung an einen Server, der dem leitungsvermittelten Zugangsnetzwerk zugehörig ist, wobei die Übergabeanforderung die bestimmte Sitzungstransfernummer enthält;
Empfangen (512) einer Übergabeantwort von dem Server, wobei die Übergabeantwort anzeigt, dass die einen oder mehreren Telekommunikationsnetzwerkkomponenten, die durch die Sitzungstransfernummer identifiziert werden, das leitungsvermittelte Zugangsnetzwerk für den Transfer der Kommunikationssitzung von dem Zugangsnetzwerk, welches dem nicht lizenzierten Spektrum zugeordnet ist, auf das leitungsvermittelte Zugangsnetzwerk vorbereitet haben; und
Anweisen (514) der Benutzervorrichtung, eine Verbindung zu dem leitungsvermittelten Zugangsnetzwerk herzustellen, um die Kommunikationssitzung fortzuführen.

2. Verfahren nach Anspruch 1, des Weiteren umfassend, vor dem Initiieren der Übergabe, das Aktivieren (502) der Registrierung der Kommunikationssitzung für die Benutzervorrichtung, die auf das Telekommunikationsnetzwerk durch das Zugangsnetzwerk zugreift, das dem nicht lizenzierten Spektrum zugeordnet ist.

3. Verfahren nach Anspruch 1, wobei das Entscheiden (506) das Auswählen des leitungsvermittelten Zugangsnetzwerks basierend auf dem Messbericht und das Bestimmen der Identität des Servers umfasst, der dem leitungsvermittelten Zugangsnetzwerk zugeordnet ist.

4. Verfahren nach Anspruch 1, wobei die Übergabeanforderung mindestens eine internationale mobile Teilnehmeridentität, IMSI, die Sitzungstransfernummer und eine internationale Mobilstation-Korrelations-Teilnehmerverzeichnisnummer (Correlation Mobile Station International Subscriber Directory Number, C-MSISDN) enthält.

5. Verfahren nach Anspruch 1, wobei die Telekommunikationsnetzwerkvorrichtung ein fortschrittlicher Paketdatengateway (evolved packet data gateway, ePDG) ist.

6. Verfahren nach Anspruch 1, wobei das Bestimmen (508) der Sitzungstransfernummer umfasst:
Bestimmen eines einzelnen Sitzungstransfernummer-Funkgeräts (session transfer number-single radio, STN-SR), das statisch einer Zugangstransfer-Steuerfunktion (access transfer control function, ATCF) zugewiesen ist, der einen oder mehreren Komponenten; oder
Abrufen eines STN-SR aus einem Heimatregister (home location register, HLR), oder einem Heimatteilnehmerserver (home subscriber server, ASS) als Teil einer Standortaktualisierung, die von der Gatewayvorrichtung für die Benutzervorrichtung durchgeführt wird.

7. Verfahren nach Anspruch 1, wobei das Bestimmen (508) der Sitzungstransfernummer umfasst:
Verwenden einer MME zum Erhalten eines STN-SR; oder
Verwenden eines Sitzungsinitiierungsprotokoll-, STP, Abonnementmechanismus zum Empfangen eines STN-SR.

8. Verfahren nach Anspruch 1, wobei das Anweisen (514) der Benutzervorrichtung dazu, eine Verbindung mit dem leitungsvermittelten Zugangsnetzwerk herzustellen, um die Kommunikationssitzung fortzusetzen, das Anweisen der Benutzervorrichtung dazu umfasst, ein Funkgerät der Benutzervorrichtung auf das leitungsvermittelte Zugangsnetzwerk einzustellen.

9. Verfahren nach Anspruch 1, wobei die Übergabeanforderung eine Einzelfunk-Sprachanrufkontinuitätsanforderung von paketvermittelt auf leitungsvermittelt ist.

10. Verfahren nach Anspruch 1, wobei die Messungen mindestens eines aus Signalstärke, Paketverlust, Paketverwerfung oder Netzwerküberlastung beinhalten.

11. Verfahren nach Anspruch 1, wobei der Messbericht eine Messung von mindestens einer Signalstärke des Zugangsnetzwerks beinhaltet, und wobei die Initiierung der Übergabe entschieden wird, wenn die Signalstärke des Zugangsnetzwerks unter einen Schwellenwert fällt.

12. Gatewayvorrichtung, die zum Ermöglichen einer Übergabe einer Kommunikationssitzung einer Benutzervorrichtung von einem Zugangsnetzwerk, das einem nicht lizenzierten Spektrum zugeordnet ist, an ein leitungsvermitteltes Zugangsnetzwerk konfiguriert ist, welches Mittel zum Durchführen der Schritte eines Verfahrens nach einem der Ansprüche 1 bis 11 umfasst.

## Revendications

1. Procédé effectué par un dispositif de passerelle pour permettre un transfert d'une session de communication d'un dispositif utilisateur depuis un réseau d'accès associé à un spectre sans licence vers un réseau d'accès à commutation de circuits, le procédé comprenant les étapes consistant à :
recevoir (504) un rapport de mesures provenant du dispositif utilisateur, le rapport de mesures comprenant des mesures associées à une pluralité de réseaux d'accès, la pluralité de réseaux d'accès comprenant au moins le réseau à commutation de circuits et le réseau d'accès associé à un spectre sans licence ;
décider (506), sur la base au moins en partie du rapport de mesures, d'initier un transfert de la session de communication du dispositif utilisateur depuis le réseau d'accès associé à un spectre sans licence vers le réseau d'accès à commutation de circuits ;
déterminer (508) un numéro de passation de session identifiant un ou plusieurs composants de réseau de télécommunication pour effectuer une passation de la session de communication depuis le réseau d'accès associé à un spectre sans licence vers le réseau d'accès à commutation de circuits ;
fournir (510) une demande de transfert à un serveur associé au réseau d'accès à commutation de circuits, la demande de transfert incluant le numéro de passation de session déterminé ;
recevoir (512) une réponse de transfert provenant du serveur, la réponse de transfert indiquant que les un ou plusieurs composants de réseau de télécommunication identifiés par le numéro de passation de session ont préparé le réseau d'accès à commutation de circuits pour la passation de la session de communication depuis le réseau d'accès associé à un spectre sans licence vers le réseau d'accès à commutation de circuits ; et
ordonner (514) au dispositif utilisateur de se connecter au réseau d'accès à commutation de circuits pour continuer la session de communication.

2. Procédé selon la revendication 1, comprenant en outre, avant d'initier le transfert, l'activation (502) d'un enregistrement de la session de communication pour le dispositif utilisateur accédant au réseau de télécommunication via le réseau d'accès associé à un spectre sans licence.

3. Procédé selon la revendication 1, dans lequel la décision (506) comprend la sélection du réseau d'accès à commutation de circuits sur la base du rapport de mesures et la détermination de l'identité du serveur associé au réseau d'accès à commutation de circuits.

4. Procédé selon la revendication 1, dans lequel la demande de transfert comprend au moins une identité d'abonné mobile internationale, IMSI, le numéro de passation de session, et un numéro d'annuaire d'abonné international de station mobile de corrélation, C-MSISDN.

5. Procédé selon la revendication 1, dans lequel le dispositif de réseau de télécommunication est une passerelle de données par paquets évoluée, ePDG.

6. Procédé selon la revendication 1, dans lequel la détermination (508) du numéro de passation de session comprend les étapes consistant à :
déterminer une radio unique à numéro de transfert de session, STN-SR, qui est statiquement affectée à une fonction de commande de passation d'accès, ATCF, des un ou plusieurs composants ; ou
obtenir une STN-SR à partir d'un registre d'emplacement domestique, HLR, ou d'un serveur d'abonné domestique, HSS, en tant que partie d'une mise à jour d'emplacement effectuée par le dispositif de passerelle pour le dispositif utilisateur.

7. Procédé selon la revendication 1, dans lequel la détermination (508) du numéro de passation de session comprend :
l'utilisation d'une MME pour obtenir une STN-SR ; ou
l'utilisation d'un mécanisme d'abonnement à protocole d'ouverture de session, SIR, pour recevoir une STN-SR.

8. Procédé selon la revendication 1, dans lequel l'instruction (514) au dispositif utilisateur de se connecter au réseau d'accès à commutation de circuits pour poursuivre la session de communication comprend l'instruction au dispositif utilisateur d'accorder une radio du dispositif utilisateur au réseau d'accès à commutation de circuits.

9. Procédé selon la revendication 1, dans lequel la demande de transfert est une demande de continuité d'appel vocal radio unique à commutation de paquets vers commutation de circuits.

10. Procédé selon la revendication 1, dans lequel les mesures comprennent au moins l'un parmi une force de signal, une perte de paquets, un rejet de paquets, ou une congestion de réseau.

11. Procédé selon la revendication 1, dans lequel le rapport de mesures comprend une mesure d'au moins une force de signal du réseau d'accès, et dans lequel il est décidé d'initier le transfert si la force de signal du réseau d'accès chute en dessous d'un seuil.

12. Dispositif de passerelle configuré pour permettre un transfert d'une session de communication d'un dispositif utilisateur depuis un réseau d'accès associé à un spectre sans licence vers un réseau d'accès à commutation de circuits qui comprend des moyens pour effectuer les étapes d'un procédé selon l'une quelconque des revendications 1 à 11.
